# FASCICULE DE BREVET EUROPEEN

(11) **EP 0 913 286 B1**
(45) Date de publication et mention de la délivrance du brevet: **08.01.2003**
(21) Numéro de dépôt: 98402713.6
(22) Date de dépôt: 30.10.1998
(51) Int. Cl.: B60J 10/02, B60J 10/08, B60J 10/00

(54) **Dispositif pour le montage étanche de pièces sur un bâti**
Vorrichtung für die dichte Montage von Werkstücken auf einem Gehäuse
Device for the sealed mounting of workpieces on a housing

(30) Priorité: 31.10.1997 FR 9713724
(43) Date de publication de la demande: 06.05.1999
(73) Titulaire: Cooper-Standard Automotive France S.A., 95871 Bezons (FR)
(72) Inventeur: Adorni, Serge, 35000 Rennes (FR); Hautbois, Yvon, 35500 Vitre (FR); Orhant, Yves, 35370 Gennes sur Seiche (FR)
(74) Mandataire: Busnel, Jean-Benoît

(56) Documents cités:
- EP-A- 0 628 453
- DE-A- 3 333 672
- DE-A- 4 141 813
- DE-A- 19 539 960
- FR-A- 1 178 894
- US-A- 4 858 988

## Description

La présente invention concerne un dispositif pour le montage étanche de pièces sur un bâti et son utilisation, en particulier pour le montage étanche d'un vitrage sur une carrosserie de véhicule automobile.

Il existe déjà des dispositifs permettant d'assurer le montage de pièces sur des carrosseries ou plus généralement sur des bâtis.

Ces dispositifs comprennent une garniture en matière élastomère dont le corps est pourvu, d'une part, d'un élément de liaison au moins partiellement surmoulé à la périphérie de la pièce à monter, et d'autre part, d'un élément assurant l'étanchéité avec les parties adjacentes du bâti.

Cependant, ces dispositifs ne sont pas adaptés à toutes les situations de montage dans la mesure où l'élément d'étanchéité a une géométrie déterminée et est lié de manière définitive à la garniture pour former un ensemble monobloc.

Dans ces conditions, l'élément d'étanchéité ne peut assurer, en toutes circonstances et de manière efficace et satisfaisante, un contact étanche avec les parties adjacentes du bâti.

Au surplus, en cas d'usure ou de détérioration de l'élément d'étanchéité, la seule solution consiste à démonter l'ensemble de la pièce avec sa garniture pour effectuer un remplacement complet, ce qui complique les opérations de maintenance.

La présente invention a pour objectif de résoudre ces problèmes techniques de manière satisfaisante.

Ce but est atteint conformément à l'invention par un dispositif de montage étanche de pièces sur un bâti, du type comprenant une garniture dont le corps élastiquement déformable est pourvu, d'une part, d'un élément de liaison au moins partiellement surmoulé à la périphérie de ladite pièce, et d'autre part, d'un élément d'étanchéité,
caractérisé en ce que ledit élément d'étanchéité fait saillie à partir de ladite garniture en direction du bâti et comporte des moyens de fixation amovible destinés à coopérer avec des moyens de retenue complémentaires portés par ladite garniture.

Selon un mode de réalisation particulier, lesdits moyens de fixation amovible sont constitués d'une protubérance réalisée sur l'une des extrémités dudit élément d'étanchéité et destinée à se verrouiller par encliquetage dans une gorge ménagée dans la garniture.

Selon une variante, ladite protubérance est en queue d'aronde de section sensiblement circulaire.

Selon une autre variante, l'embouchure de ladite gorge est rétrécie.

Selon une caractéristique avantageuse, ledit élément d'étanchéité comporte au moins une lèvre et/ou un profilé tubulaire qui s'étend latéralement par rapport à ladite pièce pour venir au contact des parties adjacentes du bâti.

Selon une autre caractéristique liée au mode d'étanchéité dynamique, ladite garniture comporte, en outre, un élément de guidage dont le profil épouse les contours des parties adjacentes du bâti.

Selon encore une autre caractéristique liée au mode d'étanchéité statique, ladite garniture comporte un élément d'ancrage dans le bâti ainsi qu'un élément de positionnement et de calage.

Selon encore une caractéristique, ledit élément d'étanchéité possède une zone de contact avec le bâti, pourvue d'un revêtement de surface à propriétés glissantes. Cette caractéristique présente un intérêt dans le cadre d'une étanchéité dynamique lorsque l'élément d'étanchéité se déplace avec la pièce relativement au bâti.

Selon un autre mode de réalisation, le bord périphérique de la pièce est emprisonné dans ledit élément de liaison formant pince.

Un autre objet de l'invention réside dans l'utilisation du dispositif défini ci-dessus pour le montage étanche d'un vitrage sur une carrosserie d'un véhicule automobile.

Le dispositif de l'invention permet un accostage précis, stable et étanche de la garniture et donc de la pièce sur le bâti, quelles que soient les contraintes liées à la géométrie de l'environnement tout en améliorant l'aspect esthétique d'ensemble.

Le montage de la pièce est donc simplifié et facilité et peut ainsi être automatisé.

Il est possible, en outre, de prévoir que les sections respectives de la garniture, des éléments d'étanchéité et des éléments de guidage, de positionnement, de calage ou d'ancrage soient variables sur le pourtour d'une même pièce, de façon à obtenir une adaptation parfaite du dispositif au montage.

Le dispositif de l'invention s'applique à tous types de montage et aussi bien à ceux où l'étanchéité est assurée de façon dynamique (vitres coulissantes...) que ceux où elle est statique (pare-brise...).

L'invention sera mieux comprise à la lecture de la description qui va suivre accompagnée des dessins sur lesquels :
- la figure 1 représente une vue en coupe transversale d'un premier mode de réalisation du dispositif de l'invention ;
- la figure 2 représente une vue en coupe transversale d'un autre mode de réalisation.

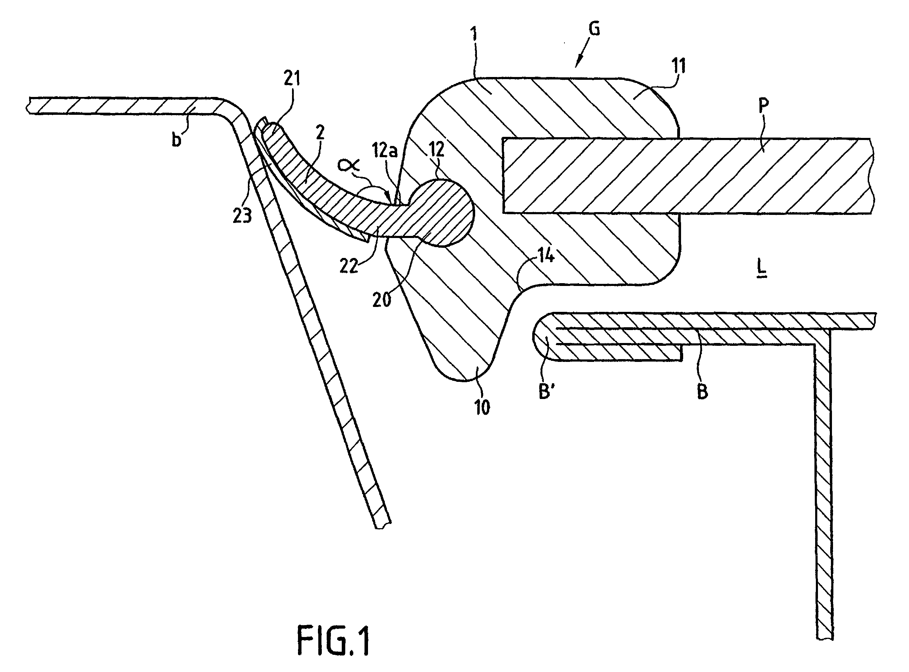

Le dispositif représenté sur la figure 1 est destiné au montage d'une pièce plane mobile P (tel qu'un panneau de verre ou un vitrage coulissant) sur un bâti ou un châssis B formé, par exemple, par une structure métallique ou une partie de carrosserie de véhicule automobile dans laquelle est ménagé un logement L.

Ce dispositif comprend une garniture G dont le corps 1 élastiquement déformable, est pourvu, d'une part, d'un élément 11 assurant la liaison avec le panneau P et, d'autre part, d'un élément 2 assurant l'étanchéité dynamique du logement L destiné à être obturé par ledit panneau par contact avec les parties adjacentes du bâti B.

L'élément de laison 11 est, au moins, partiellement surmoulé à la périphérie du panneau P, par exemple, au moyen d'un procédé d'encapsulation. Le bord périphérique du panneau P est ainsi emprisonné dans l'élément de liaison 11 formant pince.

L'élément d'étanchéité 2 fait saillie à partir du corps 1 de la garniture G en direction du bâti et plus précisément du flanc b délimitant latéralement le logement L.

L'élément d'étanchéité 2 comporte des moyens de fixation amovible destinés à coopérer avec des moyens de retenue complémentaires, portés par la garniture G.

Ces moyens de fixation 2 sont constitués, dans le mode de réalisation représenté, d'une protubérance 20 réalisée sur l'une des extrémités de l'élément d'étanchéité 2.

Cette protubérance 20 est destinée à se verrouiller par encliquetage dans une gorge 12, à parois élastiquement déformables, ménagée dans le corps 1 de la garniture G.

Selon une variante, c'est la protubérance qui se déforme élastiquement pour se verrouiller dans une cavité à parois plus rigides.

La protubérance 20 est de préférence en queue d'aronde de section sensiblement circulaire tandis que l'embouchure 12a de la gorge 12 est rétrécie.

L'introduction de la protubérance 20 dans la gorge 12 s'effectue en forçant et en déformant élastiquement l'embouchure 12a ou la protubérance elle-même selon la variante envisagée plus haut.

Il est aussi possible de prévoir que la protubérance est mise en place dans la gorge directement pendant l'opération d'encapsulation.

L'élément d'étanchéité 2 est constitué d'au moins une lèvre 21 qui s'étend latéralement par rapport au panneau P et qui se raccorde à la protubérance 20 par une entretoise 22. La lèvre 21 est réalisée, de préférence, en EPDM, TPR ou avec une matière thermoplastique.

Selon une variante non représentée, l'étanchéité est assurée ou complétée par un profilé tubulaire.

Le raccordement entre la lèvre 21 et l'entretoise 22 est réalisé, par exemple, selon un coude d'angle α compris entre 120° et 160°.

L'extrémité libre de la lèvre 21 vient en appui dynamique contre la face intérieure du flanc b du bâti B lors du déplacement du panneau P dans le logement longitudinal L, parallèlement audit bâti.

A cet effet, la zone de la lèvre 21 qui assure le contact avec le flanc b est, de préférence, pourvue d'un revêtement de surface 23 à propriétés glissantes(Flock...).

Le cas échéant, la lèvre 21 est réalisée avec une dureté variable sur sa longueur, de telle sorte que la zone de contact avec le bâti est souple tandis que la zone de raccordement avec l'entretoise est rigide.

La garniture G comporte, en outre, un élément 10 assurant le guidage du panneau mobile P relativement au bâti B.

A cet effet, le profil de l'élément 10 épouse les contours des parties du bâti B délimitant le fond du logement L.

Dans le mode de réalisation représenté, l'élément de guidage 10 est sous forme d'un bossage s'étendant vers l'intérieur du logement L de façon sensiblement perpendiculaire à l'élément d'étanchéité 2 et délimitant dans le corps 1 une cavité arrondie 14 destinée à recevoir de façon éventuellement coulissante un bord B' du bâti B.

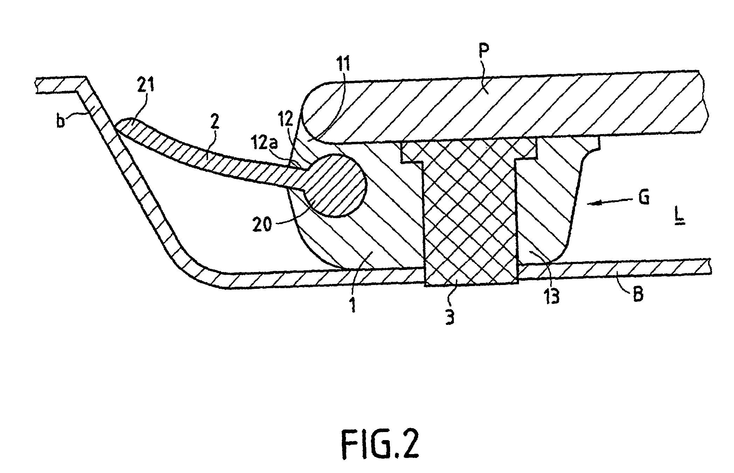

Dans le mode de réalisation représenté sur la figure 2, l'élément de liaison 11 est surmoulé sur la seule face interne du panneau P et n'est donc pas apparent depuis l'extérieur du logement L.

La garniture est, en outre, associée, d'une part, à un élément 3 assurant son ancrage (et donc celui du panneau P) sur le bâti B, dans le fond du logement L, et d'autre part, à un élément 13 formant entretoise et assurant le positionnement et le calage du panneau P au montage.

L'élément d'étanchéité 2 assure donc ici une étanchéité statique du logement L.

## Revendications

1. Dispositif pour le montage étanche de pièces (P) sur un bâti (B), du type comprenant une garniture (G) dont le corps (1) élastiquement déformable est pourvu, d'une part, d'un élément de liaison (11) au moins partiellement surmoulé à la périphérie de ladite pièce (P), et d'autre part, d'un élément d'étanchéité (2),
**caractérisé en ce que** ladite garniture (G) comporte un élément de guidage (10,14) dont le profil épouse les contours des parties adjacentes (B') du bâti (B) tandis que ledit élément d'étanchéité (2) fait saillie à partir de ladite garniture (G) en direction du bâti (B) et comporte :
- des moyens de fixation amovible destinés à coopérer avec des moyens de retenue complémentaires portés par ladite garniture (G), et
- au moins une lèvre (21) et/ou un profilé tubulaire qui s'étend latéralement par rapport à ladite pièce (P) pour venir au contact des parties adjacentes (b) du bâti (B).

2. Dispositif selon la revendication 1, **caractérisé en ce que** lesdits moyens de fixation amovible sont constitués d'une protubérance (20) réalisée sur l'une des extrémités dudit élément d'étanchéité (2) et destinée à se verrouiller par encliquetage dans une gorge (12) ménagée dans la garniture (G).

3. Dispositif selon la revendication 2, **caractérisé en ce que** ladite protubérance (20) est en queue d'aronde de section sensiblement circulaire.

4. Dispositif selon la revendication 2 ou 3, **caractérisé en ce que** l'embouchure (12a) de ladite gorge (12) est rétrécie.

5. Dispositif selon l'une des revendications précédentes, **caractérisé en ce que** ladite garniture (G) comporte un élément d'ancrage (3) dans le bâti (B) ainsi qu'un élément de positionnement et de calage (13).

6. Dispositif selon l'une des revendications précédentes, **caractérisé en ce que** ledit élément d'étanchéité (2) possède une zone de contact avec le bâti (B) pourvue d'un revêtement de surface (23) à propriétés glissantes.

7. Dispositif selon l'une des revendications précédentes, **caractérisé en ce que** le bord périphérique de la pièce (P) est emprisonné dans ledit élément de liaison (11) formant pince.

8. Utilisation du dispositif selon l'une des revendications précédentes pour le montage étanche d'un vitrage sur une carrosserie de véhicule automobile.

## Patentansprüche

1. Vorrichtung für die dichte Montage von Teilen (P) in einen Rahmen (B), von der Art, die eine Dichtung (G) umfasst, deren elastisch verformbarer Körper (1) einerseits mit einem mindestens teilweise an dem Umfang des Teiles (P) angeformten Verbindungselement (11) versehen ist, und andererseits mit einem Dichtigkeitselement (2),
**dadurch gekennzeichnet, dass** die Dichtung (G) ein Führungselement (10, 14) umfasst, dessen Profil sich den äußeren Formen der benachbarten Bereiche (B') des Rahmens (B) anpasst, wohingegen das Dichtigkeitselement (2) von der Dichtung (G) aus in Richtung des Rahmens (B) vorsteht und folgendes umfasst:
- Mittel zur lösbaren Befestigung, die dazu vorgesehen sind, mit komplementären Rückhaltemitteln, die an der Dichtung (G) angeordnet sind, zusammenzuwirken, und
- mindestens eine Lippe (21) und/oder ein Hohlprofil, das sich seitlich im Verhältnis zu dem genannten Teil (P) erstreckt, um mit den benachbarten Bereichen (b) des Rahmens (B) in Kontakt zu kommen.

2. Vorrichtung nach Anspruch 1, **dadurch gekennzeichnet, dass** die Mittel zur lösbaren Befestigung einen Vorsprung (20) umfassen, der an einem der Enden des Dichtigkeitselementes (2) ausgestaltet ist, und dazu vorgesehen ist, durch Einrasten in einer Vertiefung (12), die in der Dichtung (G) ausgestaltet ist, verriegelt zu werden.

3. Vorrichtung nach Anspruch 2, **dadurch gekennzeichnet, dass** der Vorsprung (20) verbreitert ist mit im wesentlichen kreisförmigem Querschnitt.

4. Vorrichtung nach Anspruch 2 oder 3, **dadurch gekennzeichnet, dass** die Öffnung (12a) der Vertiefung (12) eingezogen ist.

5. Vorrichtung nach einem der vorhergehenden Ansprüche, **dadurch gekennzeichnet, dass** die Dichtung (G) in dem Rahmen (B) ein Verankerungselement (3) als auch ein Ausrichtungs- und Verkeilungselement (13) umfasst.

6. Vorrichtung nach einem der vorhergehenden Ansprüche, **dadurch gekennzeichnet, dass** das Dichtigkeitselement (2) einen Kontaktbereich mit dem Rahmen-(B) umfasst, der mit einem Oberflächenbelag (23) versehen ist, der gleitende Eigenschaften aufweist.

7. Vorrichtung nach einem der vorhergehenden Ansprüche, **dadurch gekennzeichnet, dass** der umfangsseitige Rand des Teiles (P) in dem Verbindungselement (11) zangenartig eingeschlossen ist.

8. Anwendung der Vorrichtung nach einem der vorhergehenden Ansprüche für die dichte Montage einer Glasscheibe in einer Karosserie eines Kraftfahrzeuges.

## Claims

1. A device for sealed mounting of a part (P) on a frame (B), the device being of the type comprising an edging (G) having an elastically deformable body (1) provided firstly with a link element (11) overmolded at least in part on the periphery of said part (P), and secondly with a sealing element (2),
the device being **characterized in that** said edging (G) has a guide element (10, 14) whose profile matches the outlines of the adjacent portions (B') of the frame (B) while said sealing element (2) projects from said edging (G) towards the frame (B) and comprises:
- removable fixing means designed to co-operate with complementary retaining means carried by said edging (G); and
- at least one lip (21) and/or tubular section extending laterally from said part (P) to come into contact with adjacent portions (b) of the frame (B).

2. A device according to claim 1, **characterized in that** said removable fixing means are constituted by a protuberance (20) formed on one of the ends of said sealing element (2) and designed to lock by snap-fastening in a groove (12) formed in the edging (G).

3. A device according to claim 2, **characterized in that** said protuberance (20) constitutes a dovetail of substantially circular section.

4. A device according to claim 2 or 3, **characterized in that** the opening (12a) of said groove (12) is narrow.

5. A device according to one of the preceding claims, **characterized in that** said edging (G) has both an anchor element (3) for anchoring in the frame (B), and a positioning and wedging element (13).

6. A device according to one of the preceding claims, **characterized in that** said sealing element (2) possesses a contact zone for contacting the frame (B), which zone is provided with a surface covering (23) having sliding properties.

7. A device according to one of the preceding claims, **characterized in that** the peripheral edge of the part (P) is held captive in said link element (11) which forms a clamp.

8. The use of the device according to one of the preceding claims, for sealed mounting of a window in the bodywork of a motor vehicle.
